(19) Europäisches Patentamt
European Patent Office
Office européen des brevets

(11) **EP 1 517 805 B1**

(12) **FASCICULE DE BREVET EUROPEEN**

(45) Date de publication et mention
de la délivrance du brevet:
**05.08.2009   Bulletin 2009/32**

(21) Numéro de dépôt: **03761651.3**

(22) Date de dépôt: **27.06.2003**

(51) Int Cl.:
**B60G 7/00** ^(2006.01)

(86) Numéro de dépôt international:
**PCT/FR2003/001986**

(87) Numéro de publication internationale:
**WO 2004/002761 (08.01.2004 Gazette 2004/02)**

(54) **BRAS DE SUSPENSION ET PROCEDE POUR SA FABRICATION**

AUFHÄNGUNGSARM UND HERSTELLUNGSVERFAHREN DAFÜR

SUSPENSION ARM AND METHOD FOR MAKING SAME

(84) Etats contractants désignés:
**AT BE BG CH CY CZ DE DK EE ES FI FR GB GR HU IE IT LI LU MC NL PT RO SE SI SK TR**

(30) Priorité:  **28.06.2002  FR 0208061**

(43) Date de publication de la demande:
**30.03.2005   Bulletin 2005/13**

(73) Titulaire: **Auto Chassis International
92100 Boulogne Billancourt (FR)**

(72) Inventeurs:
• **MICHEL, Philippe
F-91220 Le Plessis Pate (FR)**
• **THIREL, Jean Marc
F- 78700 Conflans Sainte Honorine (FR)**
• **TROUILLAS, Bernard
F-72100 Le Mans (FR)**
• **VENEAU, Jean
F-92500 Rueil Malmaison (FR)**

(74) Mandataire: **Rougemont, Bernard
Renault Technocentre
Département Propriété Intellectuelle
Sce 00267 TCR GRA 2 36
1 Avenue du Golf
78288 Guyancourt Cedex (FR)**

(56) Documents cités:
**US-A- 5 516 129          US-A- 5 607 177**

**Description**

La présente invention concerne les bras de suspension inférieurs placés à l'avant du véhicule et plus particulièrement les bras de type « rectangle » monotôle.

Les bras de ce type présentent une pièce unique avec une zone de fixation sur le porte fusée et deux zones de fixations constituant une charnière entre le bras et le châssis du véhicule. L'articulation avant et l'articulation arrière de cette charnière présentent des axes sensiblement parallèles. Selon les véhicules sur lesquels les bras doivent être implantés, les deux articulations de la charnière sont d'axe horizontal comme le montre le document US 55 16 129 ou les deux articulations de la charnière sont d'axe vertical. Une telle disposition ne permet pas une souplesse radiale de l'articulation arrière de la charnière, appelée de façon connue le point B. Il serait en effet nécessaire de mettre en place un plot élastique de grande dimension alors que ce point B est situé dans un espace restreint.

Un des objectifs de l'invention est donc de répondre à ces impératifs de souplesse de l'articulation de la charnière, et ce dans un contexte de bras monotôle.

A ce titre, l'invention propose un bras de suspension avant de véhicule automobile, comportant trois alésages correspondant respectivement à une articulation du bras à un support de roue, à une articulation avant et une articulation arrière d'une charnière formée entre ce bras et le châssis du véhicule.

Ce bras de suspension est **caractérisé en ce qu**'il est formé d'une pièce unique en tôle et en ce que les alésages correspondant aux articulations de la charnière sont d'axes sensiblement perpendiculaires.

Selon une autre caractéristique de la présente invention, les centres des articulations avant et arrière de la charnière sont situés dans un même plan longitudinal.

Dans le but de proposer un train de suspension dont l'encombrement est minimal, le centre de l'articulation avant de la charnière est situé en retrait d'un plan transversal passant par le centre de l'articulation du bras sur le support de roue.

Selon une caractéristique de la présente invention, la pièce unique est formée d'une tôle emboutie présentant une partie centrale plane, un premier côté reliant l'articulation du bras au support de roue et l'articulation arrière de la charnière, un deuxième coté reliant l'articulation du bras au support de roue et l'articulation avant de la charnière et un troisième côté reliant les deux articulations de la charnière.

La réalisation du bras dans la zone proche de l'articulation avant impose des contraintes fortes du fait de l'orientation horizontale de cette articulation. Dans le but de présenter un bras répondant aux critères de tenue aux efforts, un plan de jonction sensiblement vertical relie le deuxième côté au pourtour de l'alésage correspondant à l'articulation avant de la charnière, et un plan de jonction sensiblement horizontal relie le troisième côté au pourtour de cet alésage.

Afin de stabiliser la section du bras en cas de freinage ou de choc longitudinal, et respectivement de rigidifier le bras sous effort de virage, le premier côté est muni d'une paroi verticale, et respectivement le deuxième côté est muni d'un bord relevé dont la hauteur varie progressivement, bord relevé sur lequel porte un bord tombé à angle droit, dirigé vers l'extérieur du bras.

Selon une autre caractéristique de la présente invention, des moyens d'indexation sont portés par le bord tombé.

Selon une autre caractéristique de la présente invention, des moyens de détermination de l'assiette du véhicule sont portés par le bord tombé.

Selon une autre caractéristique de la présente invention, une rainure est formée le long de la partie centrale de la pièce unique du bras.

Afin de permettre le montage et la tenue des moyens élastiques assurant l'articulation du bras sur le châssis, dans un contexte de bras à pièce unique, un collet est réalisé dans la continuité de l'alésage correspondant à l'articulation avant de la charnière, ce collet étant orienté vers l'articulation arrière de la charnière. Cette orientation engendre un sens de montage de l'élément élastique devant assurer l'articulation avant de la charnière, cet élément élastique étant monté à « contre collet » afin d'assurer une meilleure tenue aux efforts de freinage.

L'invention porte également sur le procédé d'obtention d'un tel bras de suspension, comportant l'emboutissage d'une pièce unique en tôle présentant trois articulations avec le châssis et un support de roue, **caractérisé en ce qu**'il comprend au moins la formation d'une surface plane triangulaire présentant à deux extrémités un alésage d'axe vertical, la création d'un bord relevé et d'un bord tombé porté à angle droit par ce bord relevé sur le côté situé entre l'articulation avant de la charnière et l'articulation de support de roue, la création d'une paroi verticale sur le côté situé entre l'articulation arrière de la charnière et l'articulation de support de roue, la formation de formes adoucies et de plans de jonctions complémentaires des côtés adjacents pour générer l'articulation avant de la charnière, d'axe sensiblement horizontal, la création d'un collet, dans le prolongement de l'alésage correspondant à l'articulation avant de la charnière, en direction de l'articulation arrière, et le marquage et l'indexation du bord tombé.

D'autres caractéristiques et avantages de l'invention apparaîtront à la lecture de la description détaillée qui suit pour la compréhension de laquelle on se reportera aux dessins annexés dans lesquels :

- la figure 1 est une vue en perspective d'un bras de suspension selon l'invention.

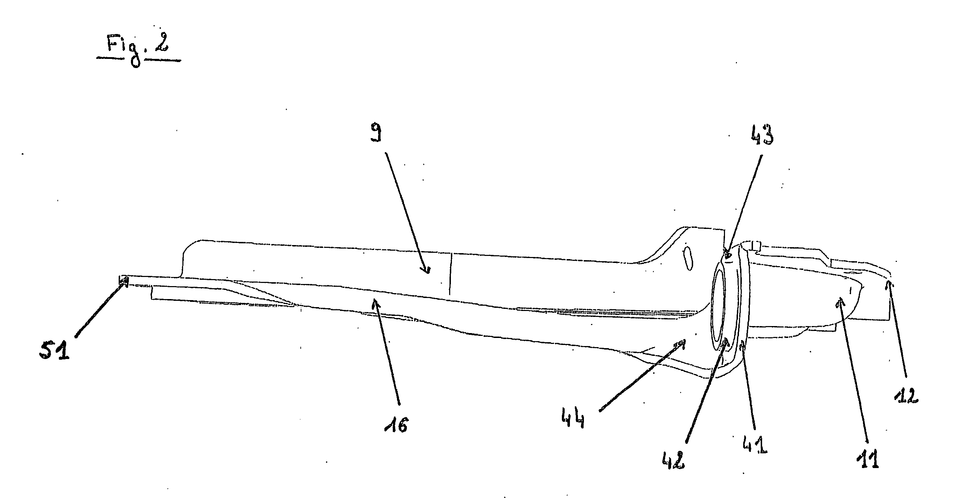

- la figure 2 est une vue de profil, depuis l'intérieur du véhicule, d'un bras de suspension tel que représenté à la figure 1.

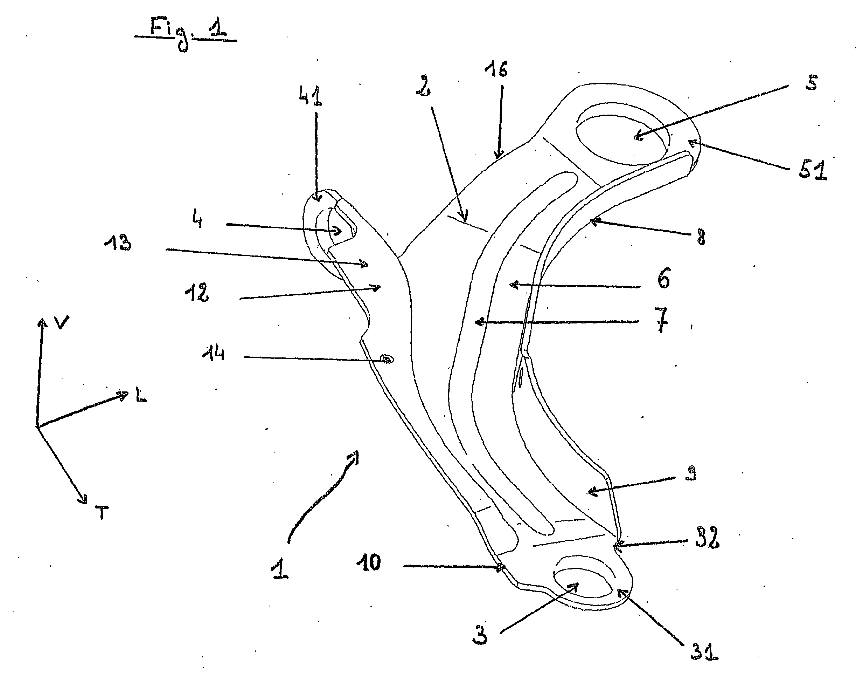

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Un bras de suspension inférieur avant 1, tel que représenté à la figure 1, est constitué d'une pièce unique 2 reliant une zone d'articulation 3 sur le support de roue et deux zones d'articulation, 4 et 5, formant une charnière entre le bras 1 et le châssis du véhicule. Ces trois zones forment un triangle sensiblement rectangle, dont l'hypoténuse relie le centre de l'articulation 3 sur le support de roue au centre de l'articulation arrière 5 de la charnière. Les côtés de ce triangle rectangle sont tels que la distance entre les deux centres d'articulations 4 et 5, constituant la charnière entre le bras et le châssis, est moins grande que la distance entre le centre d'articulation avant 4 de la charnière et le centre d'articulation 3 du bras 1 sur le support de roue, dans un rapport d'environ 2/3.

Le bras 1 est embouti de façon à présenter à chaque extrémité de l'hypoténuse un alésage d'axe vertical correspondant d'une part à l'articulation arrière 5 de la charnière entre le bras 1 et le châssis et d'autre part à l'articulation 3 du bras 1 sur le support de roue. A l'extrémité correspondant à l'articulation avant 4 de la charnière, le bras 1 présente un alésage d'axe sensiblement longitudinal. Les deux articulations, 4 et 5, du bras 1 sur le châssis présentent donc des axes sensiblement perpendiculaires, le centre de chacune de ces articulations étant situé dans le même plan longitudinal.

La partie centrale 6 du bras 1 correspond à un arc de cercle joignant les deux extrémités 3 et 5 de l'hypoténuse, d'une largeur supérieure au plus grand diamètre des deux alésages présents à ces extrémités, à titre d'exemple l'alésage correspondant à l'articulation arrière 5 de la charnière. La tôle emboutie forme autour de cet alésage un premier arrondi coaxial 51 dans la continuité de la partie centrale 6 du bras 1. De même, la tôle emboutie forme un deuxième arrondi coaxial 31 autour de l'alésage correspondant à l'articulation 3 sur le support de roue, mais dont le diamètre inférieur au premier arrondi 51 impose un décrochement 32 par rapport à la largeur de la partie centrale 6 en arc de cercle du bras 1.

Une rainure 7 est réalisée dans le fond de l'embouti, le long de la partie centrale 6 en arc de cercle. De façon connue, une telle rainure 7 permet, en améliorant la planéité, d'éviter les plissements de la tôle et les risques de déstabilisation du bras 1 lorsque celui-ci est soumis à divers efforts. Chaque extrémité de cette rainure 7 est située à une distance, prédéterminée par le calcul, des alésages présents aux deux extrémités 3 et 5 de l'hypoténuse.

Un premier côté 8 est formé par le bord de la partie centrale 6 du bras 1 en arc de cercle, situé à l'intérieur de la courbure de cet arc de cercle. Ce premier côté 8 est muni d'une paroi verticale 9. Celle-ci s'étend du décrochement 32 réalisé à proximité de l'articulation 3 sur le support de roue jusqu'au plan transversal passant par le centre de l'articulation arrière 5 de la charnière. Une telle paroi 9 est dimensionné afin de stabiliser au mieux la section du bras 1 lors d'un travail de ce bras 1 en compression dû à un freinage ou un choc longitudinal. Une telle situation entraînant alors une montée en effort importante dans ce bord 8 orienté vers l'arrière du véhicule, il s'agit d'éviter le flambage de la pièce 2. La hauteur de cette paroi 9 peut, à titre d'exemple, être d'une valeur de 40 millimètres.

Un deuxième côté 10, situé entre l'articulation 3 sur le support de roue et l'articulation avant 4 de la charnière, est également muni d'un bord relevé 11. Tandis que la paroi 9, symétriquement opposé par rapport à la rainure 7 du bras 1, est de hauteur constante, le bord relevé 11 présente une hauteur augmentant progressivement, d'une hauteur nulle près de l'articulation 3 du support de roue à une hauteur, équivalente à la paroi 9 opposée, près de l'articulation avant 4 de la charnière. Ce bord relevé 11, d'orientation verticale, porte à son extrémité libre un bord tombé 12, à angle droit avec le bord relevé 11 et orienté vers l'avant du véhicule. Ce bord tombé 12 permet ainsi une rigidification de l'ensemble lors de la compression du bras 1 dû à un effort de virage, propre à générer un effort important entre la liaison avant avec le châssis et la liaison au support de roue. La surface plane qu'il présente permet également l'intégration de différentes fonctions. Chaque bras de suspension 1 du même train, gauche et droit, présente ainsi symétriquement, d'une part une zone de marquage 13 pour la traçabilité des pièces usinées et d'autre part un trou de fixation 14 pour une biellette de commande, nécessaire pour indiquer de façon connue la valeur d'assiette du véhicule et régler ainsi l'orientation des phares du véhicule. Le bras de suspension 1 gauche possède également sur ce bord tombé 12, un détrompeur, non représenté, permettant une indexation de l'ensemble du train avant lors de l'assemblage du véhicule.

L'alésage correspondant à l'articulation avant 4 de la charnière, d'axe sensiblement longitudinal, est muni sur son pourtour d'un troisième arrondi coaxial 41. Un collet 42, réalisé par emboutissage et orienté vers l'arrière du véhicule, est porté par ce troisième arrondi 41 dans la continuité de l'alésage correspondant. Le centre de l'articulation avant 4 de la charnière est situé en retrait par rapport au plan transversal passant par le centre de l'articulation 3 sur le support de roue. A titre d'exemple, un retrait de 70 millimètres permet d'obtenir un bras plus compact et donc moins encombrant.

Du fait des caractéristiques géométriques du mode de réalisation, décrit ci-dessus, du bras 1, l'articulation avant 4 de la charnière se situe à l'extérieur du cercle défini par la partie centrale 6 du bras 1 en arc de cercle.

La partie supérieure du troisième arrondi coaxial 41 s'étend donc dans un plan sensiblement transversal jusqu'à la rencontre du bord relevé 12. Le plan de jonction 43 ainsi formé est situé dans un plan vertical.

La partie inférieure du troisième arrondi coaxial 41 s'étend elle dans un plan sensiblement longitudinal jusqu'à la rencontre d'un troisième coté 16 défini par la partie centrale 6 en arc de cercle entre les deux articulations, 4 et 5, constituant la charnière. Le plan de jonction 44 ainsi formé est situé dans un plan horizontal.

L'obtention du bras 1 par emboutissage permet d'obtenir dans cette zone des profils adoucis passant d'une section verticale à une section horizontale sans heurts. L'emboutissage permet également d'obtenir un collet 42 sans pièce rapportée puis soudée. Le bras 1 se situe alors intégralement dans un contexte mono-pièce et permet un emmanchement de l'élément élastique, assurant l'articulation avant 4 de la charnière, à « contre-collet », c'est à dire un emmanchement vers l'avant du véhicule alors que le collet 42 est orienté vers l'articulation arrière 5 de la charnière. Ce type d'emmanchement permet une meilleure tenue aux efforts de freinage.

Cet agencement autour de l'articulation avant 4 de la charnière impose de réduire les efforts longitudinaux en ce point d'articulation. La disposition sensiblement perpendiculaire, dans la charnière formée entre le bras 1 et le châssis, de l'articulation arrière 5 par rapport à l'articulation avant 4 permet d'augmenter la contribution en effort longitudinal du point correspondant à l'articulation arrière 5 de la charnière. A titre d'exemple lors d'un freinage, on a l'égalité :

$$\vec{F}_{xE} = -\Sigma\,(\,\vec{F}_{xA} + \vec{F}_{xB}\,)$$

La possibilité de rendre plus raide le point d'articulation arrière 5 de la charnière permet une augmentation de $F_{xB}$ et donc, d'après la constance de $F_{xE}$, une diminution de $F_{xA}$.

Un tel bras de suspension 1 monotôle résulte d'un procédé d'emboutissage particulier, propre à obtenir un bras 1, d'une part dans cette géométrie particulière où les articulations avant 4 et arrière 5 de la charnière formée entre le bras de suspension 1 et le châssis du véhicule sont d'axe sensiblement perpendiculaire, d'autre part validé en terme de raideur et de tenue aux efforts, notamment en cas de freinage ou de virage, et sans avoir recours à une technologie multi-pièces. Il convient de travailler la jonction 43 entre le bord tombé 12 et la partie du bras située au voisinage de l'articulation avant 4 de la charnière, ainsi que la jonction 44 entre cette partie du bras et la partie centrale 6 en arc de cercle du bras 1. Des formes adoucies permettent de ne pas générer trop de contraintes lors des passages entre des plans de section verticaux et horizontaux.

L'invention n'est nullement limitée au mode de réalisation décrit et illustré qui n'a été donné qu'à titre d'exemple.

**Revendications**

1. Bras de suspension avant (1) de véhicule automobile, comportant trois alésages correspondant respectivement à une articulation (3) du bras (1) à un support de roue, à une articulation avant (4) et une articulation arrière (5) d'une charnière formée entre ce bras (1) et le châssis du véhicule, **caractérisé en ce qu'**il est formé d'une pièce unique (2) en tôle et **en ce que** les alésages correspondant aux articulations (4, 5) de la charnière sont d'axes sensiblement perpendiculaires.

2. Bras de suspension selon la revendication 1, **caractérisé en ce que** les centres des articulations avant (4) et arrière (5) de la charnière sont situés dans un même plan longitudinal.

3. Bras de suspension selon la revendication 1 ou 2, **caractérisé en ce que** le centre de l'articulation avant (4) de la charnière est situé en retrait d'un plan transversal passant par le centre de l'articulation (3) du bras (1) sur le support de roue.

4. Bras de suspension selon l'une des revendications précédentes, **caractérisé en ce que** la pièce unique (2) est formée d'une tôle emboutie présentant une partie centrale (6) plane, un premier côté (8) reliant l'articulation (3) du bras (1) au support de roue et l'articulation arrière (5) de la charnière, un deuxième coté (10) reliant l'articulation (3) du bras (1) au support de roue et l'articulation avant (4) de la charnière et un troisième côté (16) reliant les deux articulations (4, 5) de la charnière.

5. Bras de suspension selon la revendication 4, **caractérisé en ce qu'**un plan de jonction (43) sensiblement vertical relie le deuxième côté (10) au pourtour de l'alésage correspondant à l'articulation avant (4) de la charnière.

6. Bras de suspension selon la revendication 4 ou 5, **caractérisé en ce qu'**un plan de jonction (44) sensiblement horizontal relie le troisième côté (16) au pourtour de l'alésage correspondant à l'articulation avant (4) de la charnière.

7. Bras de suspension selon l'une des revendications 4 à 6, **caractérisé en ce que** le premier côté (8) est muni d'une paroi verticale (9).

8. Bras de suspension selon l'une des revendications 4 à 7, **caractérisé en ce que** le deuxième côté (10) est muni d'un bord relevé (11) dont la hauteur varie progressivement.

9. Bras de suspension selon la revendication 8, **caractérisé en ce que** le bord relevé (11) du deuxième côté (10) porte un bord tombé (12) à angle droit, dirigé vers l'extérieur du bras (1).

10. Bras de suspension selon la revendication 9, **caractérisé en ce que** des alésages d'indexation sont portés par le bord tombé (12).

11. Bras de suspension selon la revendication 9, **caractérisé en ce que** des moyens de détermination (14) de l'assiette du véhicule sont portés par le bord tombé (12).

12. Bras de suspension selon l'une des revendications 4 à 11, **caractérisé en ce qu'**une rainure (7) est formée le long de la partie centrale (6) de la pièce unique du bras (1).

13. Bras de suspension selon l'une des revendications précédentes, **caractérisé en ce qu'**un collet (41) cst réalisé dans la continuité de l'alésage correspondant à l'articulation avant (4) de la charnière, ce collet (41) étant orienté vers l'articulation arrière (5) de la charnière.

14. Procédé d'obtention d'un bras de suspension de véhicule automobile selon l'une quelconque des revendications 1 à 13, comportant l'emboutissage d'une pièce unique (2) en tôle présentant trois articulations (3, 4 et 5) avec le châssis et un support de roue, **caractérisé en ce qu'**il comprend au moins les étapes suivantes :

la formation d'une surface plane (6) triangulaire présentant à deux extrémités un alésage d'axe vertical,
la création d'un bord relevé (11) et d'un bord tombé (12) porté à angle droit par ce bord relevé (11) sur le côté (10) situé entre l'articulation avant (4) de la charnière et l'articulation (3) de support de roue,
la création d'une paroi verticale (9) sur le côté (8) situé entre l'articulation arrière (5) de la charnière et l'articulation (3) de support de roue,
la formation de formes adoucies et de plans de jonctions (43, 44) complémentaires des côtés adjacents (10, 16) pour générer l'articulation avant (4) de la charnière, d'axe sensiblement horizontal,
la création d'un collet (41), dans le prolongement de l'alésage correspondant à l'articulation avant (4) de la charnière, en direction de l'articulation arrière (5) de cette charnière,
le marquage et l'indexation du bord tombé (12).

15. Procédé de montage d'un bras de suspension selon la revendication précédente, comportant une mise en place d'éléments élastiques réalisant l'articulation (3, 4 et 5) du bras (1) sur le châssis et un support de roue, **caractérisé en ce que** l'élément élastique, réalisant l'articulation avant (4) de la charnière formée entre le bras (1) et le châssis, est monté dans le sens opposé au collet (41).

**Claims**

1. Motor vehicle front suspension arm (1) comprising three bores corresponding respectively to an articulation (3) of the arm (1) to a wheel carrier, to a front articulation (4) and a rear articulation (5) of a hinge formed between this arm (1) and the chassis of the vehicle, **characterized in that** it is formed of a single piece (2) of sheet and **in that** the bores corresponding to the articulations (4, 5) of the hinge have substantially perpendicular axes.

2. Suspension arm according to Claim 1, **characterized in that** the centres of the front (4) and rear (5) articulations of the hinge are situated in one and the same longitudinal plane.

3. Suspension arm according to Claim 1 or 2, **characterized in that** the centre of the front articulation (4) of the hinge is set back from a transverse plane passing through the centre of the articulation (3) of the arm (1) to the wheel carrier.

4. Suspension arm according to one of the preceding claims, **characterized in that** the single piece (2) is formed of pressed sheet exhibiting a flat central part (6), a first side (8) connecting the articulation (3) of the arm (1) to the wheel carrier and the rear articulation (5) of the hinge, a second side (10) connecting the articulation (3) of the arm (1) to the wheel carrier and the front articulation (4) of the hinge, and a third side (16) connecting the two articulations (4, 5) of the hinge.

5. Suspension arm according to Claim 4, **characterized in that** a substantially vertical connecting plane (43) connects the second side (10) to the periphery of the bore corresponding to the front articulation (4) of the hinge.

6. Suspension arm according to Claim 4 or 5, **characterized in that** a substantially horizontal connecting plane (44) connects the third side (16) to the periphery of the bore corresponding to the front articulation (4) of the hinge.

7. Suspension arm according to one of Claims 4 to 6, **characterized in that** the first side (8) has a vertical wall (9).

8. Suspension arm according to one of Claims 4 to 7, **characterized in that** the second side (10) is equipped with a turned-up edge (11) the height of which varies progressively.

9. Suspension arm according to Claim 8, **characterized in that** the turned-up edge (11) of the second side (10) has an edge (12) turned down at right angles, directed towards the outside of the arm (1).

10. Suspension arm according to Claim 9, **characterized in that** indexing bores are borne by the turned-down edge (12).

11. Suspension arm according to Claim 9, **characterized in that** means (14) of determining the trim of the vehicle are borne by the turned-down edge (12).

12. Suspension arm according to one of Claims 4 to 11, **characterized in that** a slot (7) is formed along the central part (6) of the single piece of the arm (1).

13. Suspension arm according to one of the preceding claims, **characterized in that** a collar (41) is formed in the continuity of the bore corresponding to the front articulation (4) of the hinge, this collar (41) being directed towards the rear articulation (5) of the hinge.

14. Method of obtaining the motor vehicle suspension arm according to any one of Claims 1 to 13, involving pressing a single piece (2) of sheet exhibiting three articulations (3, 4 and 5) with the chassis and a wheel carrier, **characterized in that** it involves at least the following steps:

forming a triangular flat surface (6) with a bore of vertical axis at two ends,
creating a turned-up edge (11) and a turned-down edge (12) borne at right angles by this turned-up edge (11) on the side (10) situated between the front articulation (4) of the hinge and the wheel carrier articulation (3),
creating a vertical wall (9) on the side (8) situated between the rear articulation (5) of the hinge and the wheel carrier articulation (3),
forming softened shapes and joining planes (43, 44) which complement one another for the adjacent sides (10, 16) in order to generate the front articulation (4) of the hinge, the axis of which is substantially horizontal,
creating a collar (41) in the continuation of the bore corresponding to the front articulation (4) of the hinge, towards the rear articulation (5) of this hinge,
marking and indexing the turned-down edge (12).

15. Method of mounting a suspension arm according to the preceding claim, involving the fitting of elastic elements that create the articulation (3, 4 and 5) of the arm (1) to the chassis and a wheel carrier, **characterized in that** the elastic element that creates the front articulation (4) of the hinge formed between the arm (1) and the chassis is mounted in the opposite direction to the collar (41).

**Patentansprüche**

1. Vorderradaufhängungsstrebe (1) für ein Kraftfahrzeug, die drei Bohrungen aufweist, die einem Gelenk (3) der Strebe (1) an einem Radhalter, einem vorderen Gelenk (4) bzw. einem hinteren Gelenk (5) eines zwischen dieser Strebe (1) und dem Chassis des Fahrzeugs gebildeten Scharniers entsprechen, **dadurch gekennzeichnet, dass** sie aus einem einzigen Blechteil (2) gebildet ist und dass die den Gelenken (4, 5) des Scharniers entsprechenden Bohrungen im Wesentlichen senkrechte Achsen aufweisen.

2. Aufhängungsstrebe nach Anspruch 1, **dadurch gekennzeichnet, dass** sich die Mitte des vorderen Gelenks (4) und die des hinteren (5) Gelenks des Scharniers in einer gleichen Längsebene befinden.

3. Aufhängungsstrebe nach Anspruch 1 oder 2, **dadurch gekennzeichnet, dass** die Mitte des vorderen Gelenks (4) des Scharniers von einer durch die Mitte des Gelenks (3) der Strebe (1) am Radhalter passierenden Querebene zurückgesetzt positioniert ist.

4. Aufhängungsstrebe nach einem der vorhergehenden Ansprüche, **dadurch gekennzeichnet, dass** das einzige Teil (2) aus einem gezogenen Blech hergestellt ist, das einen mittleren, ebenen Teil (6), eine erste Seite (8), die das Gelenk (3) der Strebe (1) am Radhalter und das hintere Gelenk (5) des Scharniers verbindet, und eine zweite Seite (10), die das Gelenk (3) der Strebe (1) am Radhalter und das vordere Gelenk (4) des Scharniers verbindet, und eine dritte Seite (16), die die beiden Gelenke (4, 5) des Scharniers verbindet, aufweist.

5. Aufhängungsstrebe nach Anspruch 4, **dadurch gekennzeichnet, dass** eine im Wesentlichen vertikale Verbindungsebene (43) die zweite Seite (10) am Umfang der entsprechenden Bohrung mit dem vorderen Gelenk (4) des Scharniers verbindet.

6. Aufhängungsstrebe nach Anspruch 4 oder 5, **dadurch gekennzeichnet, dass** eine im Wesentlichen horizontale Verbindungsebene (44) die dritte Seite (16) am Umfang der entsprechenden Bohrung mit dem vorderen Gelenk (4) des Scharniers verbindet.

7. Aufhängungsstrebe nach einem der Ansprüche 4 bis 6, **dadurch gekennzeichnet, dass** die erste Seite (8) mit einer vertikalen Wand (9) versehen ist.

8. Aufhängungsstrebe nach einem der Ansprüche 4 bis 7, **dadurch gekennzeichnet, dass** die zweite Seite (10) mit einem erhabenen Rand (11) versehen ist, dessen Höhe sich graduell ändert.

9. Aufhängungsstrebe nach Anspruch 8, **dadurch gekennzeichnet, dass** der erhabene Rand (11) der zweiten Seite (10) einen zum Äußeren der Strebe (1) gerichteten, abfallenden Rand (12) im rechten Winkel aufweist.

10. Aufhängungsstrebe nach Anspruch 9, **dadurch gekennzeichnet, dass** Indexierbohrungen an dem abfallenden Rand (12) vorgesehen sind.

11. Aufhängungsstrebe nach Anspruch 9, **dadurch gekennzeichnet, dass** Mittel (14) zur Bestimmung des Trimms des Fahrzeugs an dem abfallenden Rand (12) vorgesehen sind.

12. Aufhängungsstrebe nach einem der Ansprüche 4 bis 11, **dadurch gekennzeichnet, dass** eine Nut (7) entlang dem mittleren Teil (6) des einzigen Teils der Strebe (1) ausgebildet ist.

13. Aufhängungsstrebe nach einem der vorhergehenden Ansprüche, **dadurch gekennzeichnet, dass** ein Bund (41) in der Fortführung der dem vorderen Gelenk (4) des Scharniers entsprechenden Bohrung realisiert ist, wobei dieser Bund (41) zu dem hinteren Gelenk (5) des Scharniers ausgerichtet ist.

14. Verfahren zum Erhalt einer Aufhängungsstrebe für ein Kraftfahrzeug nach einem der Ansprüche 1 bis 13, das Ziehen eines einzigen Blechteils (2) umfasst, das drei Gelenke (3, 4 und 5) mit dem Chassis und einen Radhalter aufweist, **dadurch gekennzeichnet, dass** es mindestens die folgenden Schritte umfasst:

Bilden einer dreieckigen, ebenen Fläche (6), die an zwei Enden eine Bohrung mit einer vertikalen Achse aufweist,
Schaffen eines erhabenen Rands (11) und eines abfallenden Rands (12), der im rechten Winkel an diesem erhabenen Rand (11) auf der Seite (10) vorgesehen ist, die sich zwischen dem vorderen Gelenk (4) des Scharniers und dem Gelenk (3) des Radhalters befindet,
Schaffen einer vertikalen Wand (9) auf der Seite (8), die sich zwischen dem hinteren Gelenk (5) des Scharniers und dem Gelenk (3) des Radhalters befindet,
Bilden von abgerundeten Formen und komplementären Verbindungsebenen (43, 44) der benachbarten Seiten (10, 16) zum Erzeugen des vorderen Gelenks (4) des Scharniers mit einer im Wesentlichen horizontalen Achse,
Schaffen eines Bunds (41) in der Verlängerung der dem vorderen Gelenk (4) des Scharniers entsprechenden Bohrung in Richtung des hinteren Gelenks (5) dieses Scharniers,
Markieren und Indexieren des abfallenden Rands (12).

15. Verfahren zur Montage einer Aufhängungsstrebe gemäß dem vorhergehenden Anspruch, das ein Anordnen von elastischen Elementen umfasst, die das Gelenk (3, 4 und 5) der Strebe (1) am Chassis und einen Radhalter realisieren, **dadurch gekennzeichnet, dass** das elastische Element, das das vordere Gelenk (4) des zwischen der Strebe (1) und dem Chassis gebildeten Scharniers realisiert, an dem Bund (41) in entgegengesetzter Richtung montiert wird.

Fig. 1

Fig. 2

**EP 1 517 805 B1**

## RÉFÉRENCES CITÉES DANS LA DESCRIPTION

**Documents brevets cités dans la description**

- US 5516129 A